# EUROPÄISCHE PATENTSCHRIFT

(11) **EP 2 253 825 B1**
(45) Veröffentlichungstag und Bekanntmachung des Hinweises auf die Patenterteilung: **07.11.2018**
(21) Anmeldenummer: 10170144.9
(22) Anmeldetag: 30.07.2003
(51) Int. Cl.: F02D 41/14, F01N 11/00, G01J 5/08

(54) **Verfahren zur applikativen Anpassung einer Motorsteuerung und nach dem Verfahren erhaltene Motorsteuerung**
Method for calibration of an engine controller and engine controller obtained using said method
Procédé d'adaptation applicative d'une commande de moteur et commande de moteur fabriqué selon ledit procédé

(30) Priorität: 31.07.2002 DE 10235094; 30.08.2002 DE 10241052
(43) Veröffentlichungstag der Anmeldung: 24.11.2010
(62) Teilanmeldung aus: 03766367.1
(73) Patentinhaber: Volkswagen Aktiengesellschaft, 38440 Wolfsburg (DE)
(72) Erfinder: Diezemann, Matthias, 13591 Berlin (DE); Büchner, Stefan, Dr., 38527 Meine (DE)
(74) Vertreter: Gulde & Partner

(56) Entgegenhaltungen:
- WO-A1-91/14855
- DE-A1- 4 032 721
- DE-A1- 4 038 829
- DE-A1- 4 308 661
- DE-A1- 4 319 924
- US-A- 5 475 223

## Beschreibung

Die Erfindung betrifft ein Verfahren zur applikativen Anpassung einer Motorsteuerung einer Brennkraftmaschine hinsichtlich der thermischen Belastung eines der Brennkraftmaschine nachgeschalteten Abgaskatalysators. Die Erfindung betrifft ferner ein Verfahren zur Motorsteuerung sowie eine nach dem Verfahren erhaltene Motorsteuerung.
Üblicherweise werden Brennkraftmaschinen in einem realen Fahrzeugbetrieb mittels Motorsteuergeräten gesteuert. Dabei werden in Abhängigkeit einer von dem Fahrer per Gaspedal angeforderten Leistung sowie einer aktuellen Motordrehzahl die erforderlichen Betriebsparameter vorgegeben. Hierzu gehören beispielsweise Drosselklappenstellung, zugeführte Kraftstoffmasse, Zündwinkel, Ventilsteuerzeiten, Luft-Kraftstoff-Gemisch etc. Diese Parameter werden Kennfeldern entnommen, die abgespeichert in der Motorsteuerung vorliegen. Dabei sind für unterschiedliche Betriebssituationen, beispielsweise Motorkaltstart oder Übergänge aus dem Volllast- in den Schubbetrieb, unterschiedliche Kennfelder vorhanden. Die Koordination der verschiedenen Kennfelder erfolgt ebenfalls durch die Motorsteuerung mittels dort abgespeicherter Algorithmen. Eine weitere Aufgabe der Motorsteuerung besteht in der Einhaltung vorgegebener Grenzwerte, beispielsweise hinsichtlich Laufruhe, Klopfgrenze und Abgasemissionen. Durch diese Rahmenbedingungen wird der Motorbetrieb begrenzt.
Einen weiteren begrenzenden Faktor stellt die thermische Belastbarkeit von im Abgasstrang der Brennkraftmaschine angeordneten Bauteilen, wie Abgaskrümmer, Abgaskatalysatoren und Sonden, dar. Katalysatoren, die aus einem vom Abgas durchströmbaren Träger aus Metall oder Keramik sowie aus einer auf dem Träger vorhandenen katalytischen Beschichtung, dem so genannten Washcoat, aufgebaut sind, sind extremen thermischen Einflüssen ausgesetzt. Diese werden zum einen durch die hohen Verbrennungsprozessbedingten Abgastemperaturen verursacht, die besonders motornah angeordnete Katalysatoren betreffen. Des Weiteren führt die exotherme Umsetzung der verschiedenen Abgaskomponenten, insbesondere der unverbrannten Kohlenwasserstoffe HC, zu sehr hohen Wärmefreisetzungen im Katalysator selbst. Infolge ungleichmäßiger Anströmung durch das Abgas sowie der radial ungleichmäßig verlaufenden Reaktionsfront innerhalb des Katalysators kommt es zusätzlich zu lokal ungleichmäßigen Aufheizungen des Katalysators. Neben den kritischen Absoluttemperaturen und den örtlichen Temperaturgradienten führt der dynamische Fahrzeugbetrieb ferner zu einer hohen thermischen Wechselbelastung mit extremen Aufheiz- und Abkühlraten. All diese Faktoren können Schädigungen der Trägermaterialien, beispielsweise in Form von Zellausbrüchen, bis hin zum sofortigen Materialversagen verursachen. Auch Abplatzungen des Washcoats werden beobachtet. Darüber hinaus führt die thermische Alterung des Washcoats über die Katalysatorlaufzeit zu einer Verschlechterung der Konvertierungsrate, so dass Emissionsgrenzwerte nicht mehr eingehalten werden können.

Um das Temperaturverhalten von Katalysatoren zu ermitteln, ist bekannt, im stationären oder instationären Betrieb, das heißt auf Fahrzeugteststrecken beziehungsweise auf Fahrzeugprüfständen, die Brennkraftmaschine in vorgegebenen Fahrzyklen zu betreiben und die Temperatur des Katalysators zu messen. Die relevanten Betriebsparameter der Brennkraftmaschine sowie die ermittelten Katalysatortemperaturen werden dann abgespeichert. Anschließend werden dann Funktionalitäten der Motorsteuerung, das heißt Kennfelder sowie Steueralgorithmen, derart adaptiert, dass im realen Fahrzeugbetrieb, wenn die Brennkraftmaschine durch die Motorsteuerung gesteuert wird, in einer entsprechenden Betriebssituation die erhöhte thermische Belastung des Katalysators vermieden wird. Es wird insbesondere angestrebt eine kritische Maximaltemperatur nicht zu überschreiten, wobei es üblich ist, einen gewissen Sicherheitsabstand zur kritischen Maximaltemperatur einzuhalten.

Bekannte Methoden zur Messung der Katalysatortemperatur verwenden Temperatursensoren (Thermoelemente), die beispielsweise an einer Eintrittsstirnfläche und/oder Austrittsstirnfläche des Katalysators angeordnet werden (DE 40 27 207 A1, DE 196 48 427 C2, DE 100 20 199 A1). Nachteilig an der Verwendung von Temperatursensoren ist zum einen ihr thermisch träges Ansprechverhalten, das zu einer verzögerten Anzeige von Temperaturänderungen führt. Hierdurch ist die Detektion von temporären Temperaturspitzen am Katalysator mit sehr geringen Halbwertsbreiten nicht möglich. Zudem erlauben Temperatursensoren nicht die Erfassung tatsächlicher Festkörpertemperaturen des Katalysators, da die Sensortemperatur selbst bei bestmöglichster Kontaktierung immer auch von der Temperatur des einströmenden Abgases beeinflusst wird. Daher zeigt ein Temperatursensor stets eine Mischung der Katalysator- und der Abgastemperatur an. Im Ergebnis erlauben Temperatursensoren nur eine zeitlich und absolut ungenaue Temperaturerfassung. Hinzu kommt, dass der einzelne Temperatursensor immer nur eine - seinem Installationsort entsprechende - Temperatur anzeigt und somit keine Aussagen über Temperaturverteilungen im Katalysator zulässt.

WO 1991/14855 A1, DE 40 38 829 A1 und DE 40 32 721 A1 beschreiben ebenfalls die Verwendung von Temperatursensoren am Katalysator, wobei in Abgasströmungsrichtung mehrere Sensoren hintereinandergeschaltet sind, um die Temperatur in verschiedenen axialen Abschnitten des Katalysators zu bestimmen. WO 1991/14855 A1 und DE 40 32 721 A1 offenbaren ferner, die Temperatur an den einzelnen Messstellen nicht punktuell, sondern über einen repräsentativen Teil des Querschnittsbereichs integral zu messen. Dafür wird ein Temperaturfühler angeordnet, der parallel zu den einzelnen Blechlagen des Katalysators verläuft, um einen über die gesamte Drahtlänge gemittelten Temperaturwert zu erfassen.

Darüber hinaus ist die berührungslose Temperaturmessung mittels schneller HC-Messtechnik bekannt. Hierbei wird stromauf des Katalysators die HC-Konzentration durch einen Flammenionisationsdetektor (FID) ermittelt. Aus der Kenntnis der HC-Konzentration sowie des Abgasmassenstroms wird dann die exotherme Erwärmung des Katalysators infolge des chemischen Energieeintrags berechnet. Problematisch hieran ist jedoch einerseits, dass Abgastemperatureinflüsse nicht berücksichtigt werden. Darüber hinaus lassen sich mit der schnellen HC-Messung einige exotherme Vorgänge bestimmter Betriebssituationen nicht detektieren.

Es sind ferner thermographische Verfahren zur berührungslosen Messung von Oberflächentemperaturen aus anderen Technikbereichen, beispielsweise zur Materialprüfung oder Überwachung mechanisch belasteter Bauteile, bekannt. Dabei wird mit einer Infrarotkamera die von dem Werkstück emittierte Infrarotstrahlung erfasst und mit einem Referenzstrahler bekannter Temperatur abgeglichen (DE 38 12 020 A1, DE 198 32 833 C2, DE 198 33 596 A1, DE 689 06 317 T2). Die Anwendung optischer Temperaturmessmethoden zur Katalysatorüberwachung beziehungsweise zur Kennfeldoptimierung ist bislang nicht bekannt.

Aufgabe der vorliegenden Erfindung ist, ein Verfahren zur Anpassung einer Motorsteuerung zu schaffen, das eine genauere Einhaltung zulässiger Temperaturbereiche von Abgaskatalysatoren gewährleistet, um eine thermische Alterung des Katalysators zu vermindern. Es soll ferner eine entsprechend erhaltene Motorsteuerung bereitgestellt werden.

Diese Aufgabe wird durch ein Verfahren mit den Merkmalen des Anspruchs 1 gelöst. Erfindungsgemäß ist vorgesehen, dass im Testbetrieb die Katalysatortemperatur über eine im Wesentlichen quer zur Abgasströmungsrichtung abgeordnete Messfläche des Katalysators von mindestens 4 cm² ermittelt wird, wobei die thermische Belastung innerhalb der Messfläche an mindestens zwei Messpunkten bestimmt wird. In Ausführungsbeispielen ist vorgesehen, dass die thermische Belastung über eine Messfläche des Katalysators von mindestens 6,5 cm², und vorzugsweise von mindestens 9 cm² ermittelt wird, wobei die thermische Belastung innerhalb diese Messfläche an mindestens 2 Messpunkten, insbesondere an mindestens 5, und vorzugsweise an mindestens 20 Messpunkten, bestimmt wird.

Indem die thermische Belastung des Katalysators ortsaufgelöst erfasst wird, wird eine genauere Berücksichtigung der thermischen Belastung von Katalysatoren erreicht. Es hat sich nämlich herausgestellt, dass infolge inhomogener Anströmung des Katalysators durch das Abgas eine lokal ungleichmäßige Temperaturverteilung erfolgt. Zusätzlich sorgt beispielsweise die Struktur des Katalysatorträgers für ein ungleichmäßiges Aufheiz- und Abkühlverhalten. Insbesondere entstehen im Fall von Metallträgern infolge einer speziellen Wickeltechnik, mit denen sie hergestellt werden, Stellen, an denen zwei glatte Folien aneinander liegen und eine erhöhte thermische Trägheit zu beobachten ist. Diese Stellen zeichnen sich sowohl bei Erwärmungs- als auch bei Abkühlungsprozessen des Katalysators durch einen nachhinkenden Temperaturverlauf aus. Die hierbei entstehenden Materialspannungen können mechanische Schädigungen des Katalysators zur Folge haben. Erfolgt, wie erfindungsgemäß vorgesehen, eine ortsaufgelöste Temperaturerfassung, so können auch diese so genannten Hot-Spots im Rahmen der Applikation der Motorsteuerung berücksichtigt und weitgehend unterbunden werden.

Während die vorausgehend genannten Maßnahmen die Ortsauflösung der Temperaturmessung betreffen, kann eine genauere Berücksichtigung der thermischen Belastung von Katalysatoren dadurch erreicht werden, dass die thermische Belastung des Katalysators zusätzlich zeitaufgelöst erfasst wird. In Ausführungsbeispielen wird die Katalysatortemperatur bei einem Temperatursprung (ΔT) in einem Bereich von 20 K bis 150 K bei einer Ausgangstemperatur in einem Bereich von 500 °C bis 950 °C mit mindestens einer der folgenden Zeitauflösungen ermittelt:
- nach 10 ms wird mindestens 10%, insbesondere mindestens 15 % des Temperatursprungs erfasst,
- nach 100 ms wird mindestens 20 %, insbesondere mindestens 30 % des Temperatursprungs erfasst,
- nach 500 ms wird mindestens 35 %, insbesondere mindestens 50 % des Temperatursprungs erfasst,
- nach 1000 ms wird mindestens 50 %, insbesondere mindestens 70 % des Temperatursprungs erfasst.

Diese hohen Zeitauflösungen, mit denen die Katalysatortemperatur im stationären und/oder instationären Testbetrieb erfasst werden, sind so abgestimmt, dass auch sehr schnelle und sehr kurz anhaltende Temperaturereignisse, insbesondere Temperaturspitzen im Katalysator, detektiert werden. Das Vorliegen derartig schneller und kurzfristiger Temperaturänderungen am Katalysator wurde im Rahmen der vorliegenden Erfindung erstmalig und überraschend erkannt. Die ermöglichte Detektion solcher Temperaturereignisse gestattet eine sehr genaue Anpassung der Motorsteuerung, insbesondere der in der Motorsteuerung gespeicherten Kennfelder und Steueralgorithmen hinsichtlich der tatsächlichen thermischen Belastung des Katalysators. Durch diese Maßnahmen ist es nunmehr möglich, den Katalysator vor thermischen Belastungen zu schützen, deren Existenz bislang unbekannt war und nur anhand der visuell zu beobachtenden Katalysatorschäden nachträglich vermutet werden konnte. Typische Betriebssituationen, bei denen unter Anwendung der erfindungsgemäßen Messtechnik entsprechend schnelle Temperaturcharakteristiken gefunden wurden, sind beispielsweise Zündaussetzer, verspätete Lambdaabsenkung zum Bauteilschutz (Bauteilschutzanfettung) und Schaltvorgänge. Infolgedessen kann die thermische Alterung von Katalysatoren wirkungsvoll verzögert werden und eine hohe Abgassicherheit gewährleistet werden. Die Kenntnis der tatsächlichen, von der Abgastemperatur unverfälschten Bauteiltemperatur erlaubt darüber hinaus die Vorgabe von Schwellenwerten für die thermische Grenzbelastung des Katalysatorträgers und/oder des Washcoats mit einem geringeren Sicherheitsabstand, da Temperaturüberschwinger sicher detektiert und durch geeignete applikative Maßnahmen reduziert werden können. Im Rahmen der vorliegenden Erfindung werden unter dem Begriff applikative Maßnahme beziehungsweise Motorapplikation die Ermittlung aller in einem Motorsteuerungsgerät gespeicherten motorspezifischen Funktionalitäten verstanden, dies sind insbesondere Kennfelder, die eine Zuordnung betriebsrelevanter Parameter zu entsprechenden Betriebspunkten enthalten sowie Steueralgorithmen, die beispielsweise eine Verknüpfung der Kennfelder bewirken. Bei überlagernden Applikationsereignissen, insbesondere im hochdynamischen Fahrzeugbetrieb (beispielsweise Volllast-Schubwechsel), kann der Einfluss einzelner Betriebsparameter wie Zündwinkel, Drosselklappenstellung oder Lambda, hinsichtlich der erlaubten Temperaturbelastung des Katalysators gezielt angepasst werden.

Nach einer vorteilhaften Ausgestaltung der Erfindung ist weiterhin vorgesehen, zeitliche Temperaturveränderungen (Temperaturtransienten) im Katalysator mit Aufheizraten und/oder Abkühlraten von mindestens 100 K/s, insbesondere mindestens 200 K/s, vorzugsweise von mindestens 1000 K/s, mit der oben genannten Zeitauflösung zu erfassen. Derartige Prozesse können mit Temperatursensoren nur mit einer erheblichen Verzögerung erfasst werden.

Im Falle kurzfristig auftretender Temperaturspitzen der Katalysatortemperatur (Temperaturüberschwinger) ist bevorzugt vorgesehen, die maximale Zeitauflösung der Temperaturmessung so auszulegen, dass Temperaturspitzen mit Halbwertsbreiten von höchstens 1000 ms, insbesondere höchstens 500 ms, erfasst werden, wobei mindestens 50 % des absoluten Temperatursprungs erfasst werden. Es ist besonders vorteilhaft vorgesehen, Halbwertsbreiten von höchstens 250 ms aufzulösen.

Die hohen Zeitauflösungen werden erreicht, wenn die Katalysatortemperatur mit einer Messfrequenz von mindestens 1 Hz, insbesondere von mindestens 10 Hz, erfasst wird. Bevorzugt sind jedoch Messfrequenzen von 50 HZ oder höher, wobei sogar Frequenzen von über 100 Hz bis in den kHz-Bereich möglich sind. Auf diese Weise können Temperaturimpulse bis in den ms-Bereich aufgelöst werden. Damit nicht zu kurzfristige Temperaturschwankungen erfasst werden, die aufgrund des verzögerten Wärmeübergangs durch die Beschichtung keinen Einfluss auf die tatsächliche Bauteiltemperatur des Trägers haben, kann vorteilhaft vorgesehen sein, bei einer Messfrequenz größer als 10 Hz die erfassten Messwerte zu mitteln, beispielsweise auf 10 Hz. Hierdurch wird zudem das Signal-Rausch-Verhältnis verbessert.

Durch die Kombination der oben genannten Maßnahmen zur zeitaufgelösten Temperaturerfassung als mit der ortsaufgelösten Temperaturerfassung können sowohl dynamische Temperaturänderungen (Temperaturtransienten) als auch örtliche Temperaturunterschiede im Katalysator (Temperaturgradienten) berücksichtigt werden.

Eine besonders geeignete Methode, um Katalysatortemperaturen mit hoher Zeit- und Ortauflösung zu erfassen, stellt die Thermographie, insbesondere die Infrarotthermographie dar, wobei in einfacher Weise mittels einer Thermographiekamera eine der tatsächlichen Ist-Temperatur entsprechende elektromagnetische Strahlung (Festkörperstrahlung) gemessen wird, die von dem Katalysator abgestrahlt wird. Entsprechend einer gewählten Messfläche lässt sich so in einfacher Weise auch der Temperaturverlauf über der Fläche ermitteln. Dabei ist für die Detektion für Temperaturen oberhalb von 500 °C der nahe Infrarotbereich besonders geeignet, während für niedrigere Temperaturen zwischen 20 und 500 °C, beispielsweise zur Beobachtung von Kaltstarteffekten, der mittlere Infrarotbereich empfindlicher ist.

Besonders vorteilhaft erfolgt die Temperaturmessung an einer Eintrittsstirnfläche und/oder einer Austrittsstirnfläche des Katalysators. Im Falle mehrteiliger, beabstandet voneinander angeordneter Träger kommt jedoch auch eine Messung der ausgebildeten Zwischenflächen in Frage.

Die erfindungsgemäße Methode zeichnet sich durch die Erfassung der tatsächlichen Festkörpertemperatur aus, wobei auch möglich ist, die Temperatur des Trägers des Katalysators getrennt von der des Washcoats zu ermitteln und zu berücksichtigen.

Die erfindungsgemäße Erfassung der Katalysatortemperatur im stationären und/oder instationären Betrieb zum Zwecke der Anpassung der Funktionalitäten der Motorsteuerung, das heißt der dort gespeicherten Kennfelder und/oder Steueralgorithmen, wird vorzugsweise für solche Betriebssituationen durchgeführt, in denen ein hohes thermisches Risiko für den Katalysator besteht. Insbesondere kann das Verfahren für Betriebssituationen angewendet werden, die mit einem hohen Risiko für das Auftreten von Einfach- und/oder Mehrfachzündaussetzern einhergehen. Die bei Zündaussetzern auftretenden Temperaturspitzen sind so kurz und haben folglich eine so geringe Halbwertsbreite, dass sie mit herkömmlichen Thermoelementen aufgrund ihrer thermischen Trägheiten nicht detektierbar sind. Weitere Betriebssituationen, die mit hohen und schnellen Temperaturänderungen verbunden sind, sind etwa Zündwinkelverstellungen, insbesondere Spätverstellungen (Zündwinkelrücknahmen); Schaltvorgänge bei Automatik- und bei Handschaltgetrieben oder hochdynamische Vorgänge, insbesondere Übergänge von Volllast- in Schubbetrieb. Weitere applikativ zu adaptierende Betriebssituationen sind etwa Lambdaabsenkungen, ausgehend von fettem Lambda als Maßnahme zum Bauteilschutz; Lufteinblasungen in den Krümmer bei fettem Lambda sowie schnelle Lambdaoszillationen. Dabei werden für jede Betriebssituation die Katalysatortemperaturen zusammen mit den maßgeblichen Betriebsparametern ermittelt. Die zur Steuerung der Brennkraftmaschine im realen Fahrzeugbetrieb in einer gleichartigen Betriebssituation verwendeten Kennfelder und Steueralgorithmen werden dann so adaptiert, dass bei ihrer Anwendung die erhöhte thermische Belastung des Katalysators vermieden wird. Insbesondere wird die applikative Maßnahme derart ausgelegt, dass eine katalysatorspezifische kritische Absoluttemperatur des Katalysators und/oder eine kritische Aufheizrate und/oder eine kritische Abkühlrate nicht erreicht wird. Es werden somit nicht nur besonders hohe Katalysatortemperaturen vermieden, sondern auch sehr schnelle Aufheiz- und Abkühlprozesse. Die applikative Maßnahme kann beispielsweise in Form einer Kennfeldanpassung durch Grenzwertfestlegung erfolgen, welche die in einer Betriebssituation wählbaren Betriebsparameter begrenzt. Denkbar ist auch, als applikative Maßnahme eine Anpassung von Steueralgorithmen vorzusehen, die in thermisch kritischen Betriebssituationen eine hinsichtlich der thermischen Belastung des Katalysators geeignete Steuerung der Brennkraftmaschine vornehmen.

Die Erfindung betrifft ferner ein Verfahren zur Steuerung einer Brennkraftmaschine. Nach dem Verfahren werden Betriebsparameter zur Steuerung der Brennkraftmaschine in Abhängigkeit einer aktuellen Betriebssituation anhand von applikativen Mitteln einer Motorsteuerung, insbesondere anhand von Kennfeldern und/oder Steueralgorithmen, in einer Weise vorgegeben werden, dass eine erhöhte thermische Belastung des Katalysators vermieden wird. Dabei werden die applikativen Mittel gemäß dem erfindungsgemäßen Verfahren ermittelt.

Die Erfindung betrifft ferner eine Motorsteuerung, die applikative Mittel (Funktionalitäten), insbesondere Kennfelder und/oder Steueralgorithmen umfasst, die in der oben beschriebenen Weise erhalten wurden.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnungen näher erläutert. Es zeigen:
- Figur 1: eine schematische Darstellung einer Brennkraftmaschine mit einer erfindungsgemäßen Motorsteuerung;
- Figur 2: Anordnung eines Abgaskatalysators mit Thermographiekameras ;
- Figur 3: zeitliche Verläufe einer mittels Thermographie und Thermoelement ermittelten Katalysatortemperatur, einer mittels Thermoelement ermittelten Abgastemperatur sowie einer HC-Konzentration im Laufe periodischer Mehrfachzündaussetzer bei Volllast ;
- Figur 4: zeitliche Verläufe einer mittels Thermographie und Thermoelement ermittelten Katalysatortemperatur sowie einer HC-Konzentration im Laufe periodischer Einfachfachzündaussetzer bei Volllast ;
- Figur 5: zeitliche Verläufe der Größen wie in Figur 3 gemessen im Laufe periodischer Lufteinblasungen im Krümmer bei fettem Abgas;
- Figur 6: zeitliche Verläufe einer mittels Thermographie und Thermoelement ermittelten Katalysatortemperatur im Laufe einer einmaligen Zündwinkelrücknahme;
- Figur 7 -9: zeitliche Verläufe verschiedener Messgrößen und Betriebsparameter sowie Temperaturtransienten im Laufe einer kritischen Zündwinkelrücknahme bei Schaltvorgängen eines Automatikgetriebes;
- Figur 10 - 12: zeitliche Verläufe verschiedener Messgrößen und Betriebsparameter sowie Temperaturtransienten während Schaltvorgängen eines Handschaltgetriebes;
- Figur 13: zeitliche Verläufe verschiedener Messgrößen und Betriebsparameter bei einem Volllast-Schub-Übergang; und
- Figur 14, 15: zeitliche Verläufe verschiedener Messgrößen und Betriebsparameter sowie zeitliche Temperaturgradienten bei einem Schub-Volllast-Übergang.

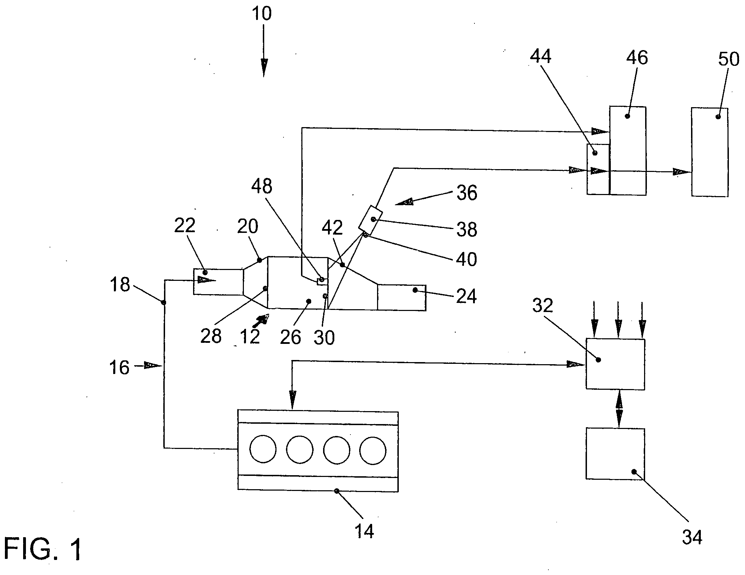

Figur 1 zeigt eine insgesamt mit 10 bezeichnete Vorrichtung zur Messung der Temperatur eines von einem Abgas einer Verbrennungskraftmaschine durchströmten oder durchströmbaren Katalysators 12. Die Vorrichtung 10 ist Bestandteil eines im Einzelnen nicht dargestellten dynamischen Motorprüfstandes für Verbrennungskraftmaschinen 14. Der Katalysator 12 ist in einem Abgasstrang 16 der Verbrennungskraftmaschine 14 angeordnet und mit dem Abgas 18 beaufschlagbar. Der Katalysator 12 umfasst ein Gehäuse 20 mit einem Einlassstutzen 22 für das unbehandelte Abgas 18 und einem Auslassstutzen 24 für das katalytisch behandelte Abgas 18. Innerhalb des Gehäuses 20 ist der Katalysatorträger 26 angeordnet, der mit einer katalytisch wirksamen Beschichtung (dem so genannten Washcoat) beschichtet ist. Beispielsweise handelt es sich um einen Metallkatalysatorträger, der typischerweise als Wickelkatalysator ausgebildet ist. Hierbei wird bekanntermaßen eine die katalytisch wirksame Beschichtung tragende Metallfolie als Katalysatorwicklung bereitgestellt und in das Gehäuse 20 gasdicht eingepasst. Neben Metallkatalysatorenträger sind auch Keramikträger, so genannte Monolithe oder dergleichen einsetzbar. Der Katalysatorträger 26 besitzt eine erste Stirnfläche 28, über die das Abgas 18 in den Katalysatorträger 26 einströmt, und eine zweite Stirnfläche 30, über die das katalytisch behandelte Abgas 18 ausströmt.

Der Verbrennungskraftmaschine 14 ist eine Motorsteuerung 32 zugeordnet, mittels der den Arbeitsmodus der Verbrennungskraftmaschine 14 beeinflussende Betriebsparameter, wie beispielsweise Zündwinkel, Drosselklappenstellung, Einspritzzeitpunkte, einzuspritzende Kraftstoffmengen, Ventilsteuerzeiten oder dergleichen, vorgebbar sind. Diese Parameter werden üblicherweise in Abhängigkeit von einen aktuellen Betriebspunkt, wie Motorlast oder Motordrehzahl vorgegeben, wobei abgespeicherte Kennfelder verwendet werden. Ferner kann die Motorsteuerung 32 auch Steueralgorithmen enthalten, die eine Koordination der Kennfelder sowie die Steuerung bestimmter Prozesse bewirken. Die Motorsteuerung 32 wirkt mit einem Getriebesteuergerät 34 zusammen, so dass der Motorsteuerung 32 auch die Betriebsparameter eines - in Figur 1 nicht dargestellten - Getriebes der Verbrennungskraftmaschine 14 bekannt sind. Weitere betriebsrelevante Parameter, beispielsweise Signale von Gassensoren des Abgasstrangs, finden ebenfalls Eingang in die Motorsteuerung 32.
Die Vorrichtung 10 umfasst ferner eine Bildaufzeichnungseinrichtung 36, die vorzugsweise als Nah-Infrarot-Thermographiekamera 38 ausgebildet ist. Ein Objektiv 40 ist über ein optisches Fenster 42, beispielsweise aus Saphirglas, auf die Stirnfläche 30 der Katalysatorwicklung 26 gerichtet. Die Stirnfläche 30 oder zumindest ein Teil der Stirnfläche 30 bildet somit eine Messfläche zum Messen der Temperatur mittels der Bildaufzeichnungseinrichtung 36, wie nachfolgend noch näher erläutet wird.
Gemäß der in Figur 1 gezeigten Ausführungsform umfasst die Vorrichtung 10 nur eine Bildaufzeichnungseinrichtung 36, die der Stirnfläche 30 zugeordnet ist. Nach weiteren Ausführungsbeispielen kann eine weitere Bildaufzeichnungseinrichtung 36 vorgesehen sein, die der Stirnfläche 28 zugeordnet ist. Eine dritte Möglichkeit besteht darin, dass nur eine der Stirnfläche 28 zugeordnete Bildaufzeichnungseinrichtung 36 vorgesehen ist.
Die Bildaufzeichnungseinrichtung 36 ist mit einer Auswerteeinrichtung 44 verbunden. Der Auswerteeinrichtung 44 ist eine Kalibrierung 46 zugeordnet, die mit wenigstens einem Temperatursensor (Thermoelement) 48 verbunden ist, der in einen Bereich von 0 bis 2 mm von der Stirnfläche 30 (und/oder Stirnfläche 28) in axialer Richtung in die Katalysatorwicklung 26 eingebracht ist. Hierfür wird das Thermoelement 48 in die Zellen beziehungsweise Kanäle des Trägers 26 eingeschoben und der Zellaustritt beispielsweise mit Keramikkleber verschlossen, um eine Durchströmung der Zellen mit Abgas zu verhindern. Die Auswerteeinrichtung 44 und die Kalibrierung 46 sind mit einem Speichermittel 50 verbunden.

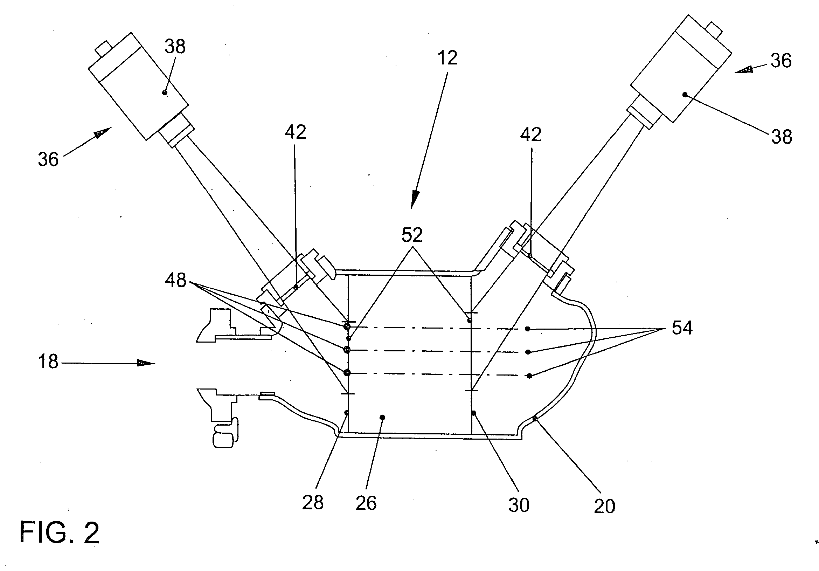

Figur 2 zeigt die Anordnung eines Katalysators 12 innerhalb der Vorrichtung 10 nach einer weiteren Ausführungsvariante im Längsschnitt, wobei gleiche Teile wie in Figur 1 mit gleichen Bezugszeichen versehen und nicht nochmals erläutert sind. Hierbei sind dem innerhalb des Gehäuses 20 angeordneten Katalysatorträger 26 zwei als Nah-Infrarot-Thermographiekameras 38 ausgebildete Bildaufzeichnungseinrichtungen 36 zugeordnet. In dem Gehäuse 20 des Katalysators 12 sind zwei optische (IR-durchlässige) Fenster 42 vorgesehen, durch die eine thermographische Betrachtung der Stirnflächen 28 und 30 möglich ist. Entsprechend dem Abstand der Kameras 38 zum optischen Fenster 42, der Größe des optischen Fensters 42 und der Größe der Stirnflächen 28 und 30 des Katalysatorträgers 26 ergibt sich hierdurch jeweils eine Messfläche 52 auf den Stirnflächen 28 und 30. Die optischen Fenster 42 bestehen beispielsweise aus einem Saphirglas oder einem anderen IR-durchlässigen Material. In die Stirnfläche 28 sind im Bereich der Messfläche 52 die Thermoelemente (Temperatursensoren) 48 integriert, die über hier angedeutete Signalleitungen 54 mit der Kalibrierung 46 verbunden sind. Die Thermoelemente 48 dienen der Kalibrierung der Thermographiekameras 38 sowie Vergleichszwecken.

Die in den Figuren 1 und 2 dargestellte Vorrichtung 10 zeigt folgende Funktion:
Mittels des Motorenprüfstandes wird die Verbrennungskraftmaschine 14 in vorgegebenen dynamischen Testzyklen gefahren. Hierbei erfolgt eine Ansteuerung der Verbrennungskraftmaschine 14 über die Motorsteuerung 32, wobei Betriebsparameter der Verbrennungskraftmaschine 14 eingestellt werden, die aus Testfahrten eines Kraftfahrzeuges mit einer auf dem Prüfstand verwendeten entsprechenden Verbrennungskraftmaschine 14 gewonnen wurden. Entsprechend der Ansteuerung der Verbrennungskraftmaschine 14 erfolgt eine Beaufschlagung des Abgasstranges 16 mit dem Abgas 18, das eine von den eingestellten Betriebsparametern der Verbrennungskraftmaschine 14 abhängige Temperatur und Schadstoffzusammensetzung besitzt. Das Abgas 18 trifft auf die Stirnfläche 28 des Katalysatorträgers 26, durchströmt den Katalysatorträger 26 und tritt auf der Stirnfläche 30 wieder aus.

Über die Nah-Infrarot-Thermographiekamera 38 wird die Messfläche 52 der Stirnflächen 28, 30 abgetastet und eine Bildsequenz aufgenommen. Entsprechend der Ansteuerung der Kamera 38, beispielsweise mit einer Taktung ≥ 50 Hz, werden mit entsprechender Wiederholfrequenz Einzelbilder aufgenommen, die zusammen die Bildsequenz ergeben. Hierbei wird jeweils die Intensität der Festkörperstrahlung im Nah-Infrarot-Wellenlängenbereich im Vollbild über die Messfläche 52 aufgezeichnet. Die entsprechenden von der Kamera 38 gelieferten digitalen Signale werden der Auswerteeinrichtung 44 zugeführt. Mittels der Kalibrierung 46 wird der Intensität der Wärmestrahlung des Katalysatorträgers 26 im Bereich der Messfläche, eine entsprechende Festkörpertemperatur zugeordnet. Hierdurch lassen sich maximale Temperaturbelastungen und reale zeitliche Temperaturänderungen (Transienten) ermitteln.

Es werden für die angefahrenen Motorbetriebspunkte somit die tatsächlichen Festkörpertemperaturen des Katalysatorträgers 26 ermittelt und betriebspunktabhängig abgespeichert. Um eine exakte zeitliche Zuordnung einer Temperatur beziehungsweise eines örtlich über die Messfläche aufgelösten Temperaturverlaufs zu einem angefahrenen Betriebspunkt zu gewährleisten, erfolgt vorzugsweise eine Synchronisation der Temperaturmessung mit dem aktuellen Betriebspunkt durch Triggerung. Hierfür wird beispielsweise ein von dem Prüfstand ausgegebenes 5V-Triggersignal zur Auslösung der Temperaturerfassung verwendet.

Die Zuordnung der gemessenen Katalysatortemperaturen zu den Betriebsparametern wird für jede auf dem Motorprüfstand angefahrene Betriebssituation abgespeichert. Die ermittelten Betriebsparameter werden betriebspunktabhängig in Kennfeldern beziehungsweise Kennlinien gespeichert, die unter Vorgabe nicht zu überschreitender Grenzwerte für die absolute Katalysatortemperatur sowie für kritische positive und negative Temperaturtransienten so angepasst werden, dass in einer ähnlichen Betriebssituation die auf dem Prüfstand gemessene erhöhte thermische Belastung nicht auftritt. Auf diese adaptierten und in der Motorsteuerung gespeicherten Kennfelder wird im realen Fahrzeugbetrieb zugegriffen, um in Abhängigkeit eines von einem Fahrer per Gaspedal angeforderten Drehmoments die erforderlichen Betriebsparameter einzustellen. Stellen sich beispielsweise auf dem Motorprüfstand kritische Temperaturbelastungen des Trägers 26 bei Zündwinkelrücknahmen bei Schaltvorgängen eines Automatikgetriebes ein, so werden die zur Steuerungen der Automatik-Schaltvorgänge verwendeten Kennfelder und/oder Steuerungsalgorithmen so adaptiert, dass die thermische Belastung im realen Fahrzeugbetrieb vermindert wird beziehungsweise vermieden wird.

Die Kalibrierung der von der Kamera 38 ausgegebenen Signale, das heißt die Zuordnung der gemessenen Intensität zu tatsächlichen Festkörpertemperaturen erfolgt anhand von stationären Motorbetriebspunkten der Verbrennungskraftmaschine 14. Hierzu wird die Verbrennungskraftmaschine 14 in einem definierten Betriebspunkt gefahren, bis sich am Katalysator 12 eine Gleichgewichtstemperatur einstellt. Diese Temperatur wird über die Temperatursensoren 48 gemessen und der Kalibrierung 46 mitgeteilt. Gleichzeitig werden während dieser Kalibrierphase mittels der Kamera 38 die Bildsequenzen der Messfläche 52 aufgezeichnet, so dass entsprechend der aufgenommenen Intensität eine exakte Zuordnung zu einer definierten Temperatur auf der Oberfläche 28 erfolgen kann. Die Zuordnung der Temperatur zur gemessenen Intensität wird in einer Kennlinie in dem Speicher 50 abgelegt. Dieses Kalibrieren der Kamera 38 kann in festgelegten Zyklen beispielsweise vor einem Messzyklus und/oder nach einem Messzyklus erfolgen. Hierdurch werden die optische Messung mittels der Kamera 38 beeinflussende Störfaktoren, beispielsweise eine Verschmutzung (Verrußung) des optischen Fensters 42 eliminiert.

Anhand der vorstehenden Erläuterungen wird deutlich, dass durch Wahl der Abtastfrequenz der Kamera 38 hoch zeitauflösend über die Messfläche 52 Temperaturimpulse bis in den Millisekunden-Bereich erfasst werden können. Somit stehen eine Vorrichtung 10 und ein Verfahren zur Verfügung, mittels denen berührungslos in Ist-Zeit eine zuverlässige Messung der Oberflächentemperatur, hier insbesondere an der Stirnseite 28 und/oder 30 eines Katalysatorträgers 26, erfolgen kann. Beispielsweise können so im dynamischen Motorbetrieb typischerweise auftretende Temperaturimpulse ΔT von 20 bis 200 K in einem Zeitraster mit 10 ms-Schritten aufgelöst werden. Für den typischen Messbereich von Hochtemperatureffekten von 500 bis über 1200 °C eignet sich besonders der nahe Infrarotbereich (NIR), während für die Untersuchung im Niedrigtemperaturbereich (Kaltstarteffekte) der mittlere Infrarotbereich (MIR) empfindlicher ist.

Bei der Aufzeichnung des zeitlichen Temperaturgradienten (Temperaturtransienten) kann eine Mittlung der Messwerte erfolgen. Entsprechend der Wiederholfrequenz der Kamera 38 ergibt sich eine Anzahl von Messwerten pro Sekunde. Bei einer Mittelung, beispielsweise von einer Messfrequenz von 50 HZ auf eine Frequenz von 10 Hz, wird für die gewählte Anzahl von Messungen ein Mittelwert gebildet. Hierdurch können extrem kurzfristige Temperaturschwankungen, die keinen Einfluss auf die tatsächliche Temperatur der Katalysatorwicklung 26 haben, ausgeblendet werden und unberücksichtigt bleiben. Diese sehr kurzfristigen Temperaturschwankungen werden aufgrund eines verzögerten Wärmeüberganges über die katalytisch wirksame Beschichtung nicht am Träger wirksam.

Neben der sehr hohen zeitlichen Auflösung des Temperaturverlaufs gestattet das erfindungsgemäße System auch eine sehr gute Ortsauflösung über die gesamte Messfläche durch Aufnahme eines zweidimensionalen Intensitätsprofils. Hierdurch können auch infolge inhomogener Anströmung des Katalysators durch das Abgas auftretende lokale Temperaturspitzen erfasst und unterdrückt werden.

Weiterhin ist als Vorteil hervorzuheben, dass das erfindungsgemäße Verfahren und die erfindungsgemäße Vorrichtung die Erfassung der tatsächlichen Bauteiltemperatur gestatten, die praktisch nicht durch Temperatureffekte des einströmenden Abgases verfälscht wird.

Durch Übernahme der Ergebnisse in die Motorapplikation, das heißt die Erstellung der Kennlinien und Kennfelder und Steueralgorithmen mit der erfindungsgemäßen Vorgehensweise, lassen sich im dynamischen Realverkehr auftretende Temperaturspitzen wirkungsvoll unterdrücken. Die Alterung und Schädigung des Katalysators kann damit reduziert und eine höhere Abgassicherheit erzielt werden.

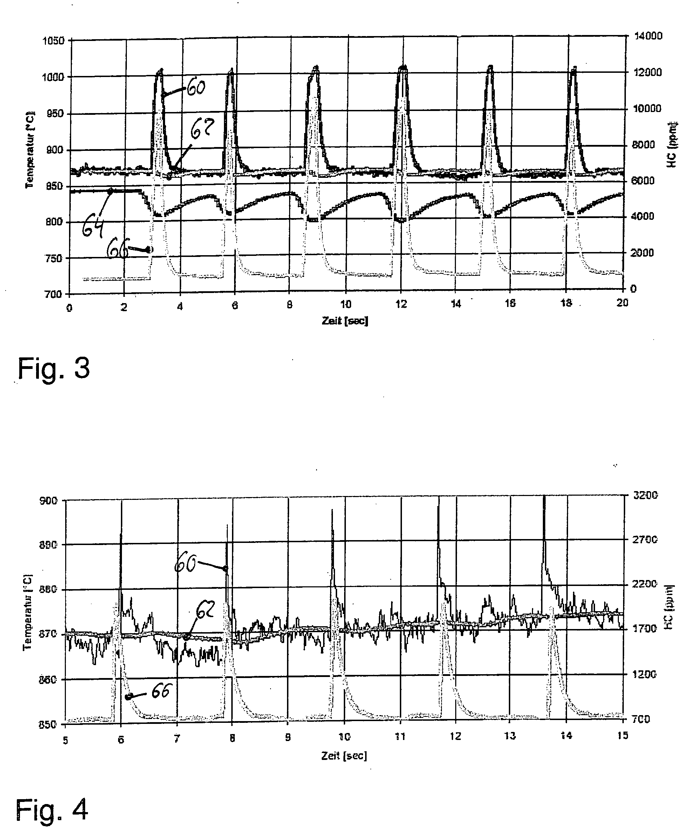

Die Figuren 3 bis 15 zeigen die Verläufe verschiedener Messgrößen sowie Betriebsparameter der Brennkraftmaschine 14 in verschiedenen auf dem instationären Prüfstand angefahrenen Betriebssituationen. In allen Messreihen wurde die Temperatur der Eintrittsstirnfläche 28 des Katalysatorträgers 26 thermographisch mit der Thermographiekamera 38 ermittelt sowie zum Vergleich mit einem herkömmlichen Temperatursensor 48, der in unmittelbarere Nähe des thermographisch ausgewerteten Bereichs angeordnet war. Ferner wurde in einigen Messreihen die Abgastemperatur mittels eines stromauf des Katalysators 12 angeordneten Temperatursensors (in Figur 1 und 2 nicht dargestellt) gemessen. Ferner wurde in einigen Versuchen die Konzentration unverbrannter Kohlenwasserstoffe HC mit der schnellen FID-Messtechnik (Flammenionisationsdetektion) bestimmt. Hierfür war ein ebenfalls nicht dargestellter Gassensor stromauf des Katalysators 12 angeordnet. In den Figuren 3 bis 15 werden die gleichen Bezugszeichen für die gleichen Messgrößen verwendet.

Figur 3 zeigt Ergebnisse, die bei Mehrfachzündaussetzern im Volllastbetrieb der Brennkraftmaschine 14 erhalten wurden. Hierfür wurde in periodischen Abständen die Zündung eines Zylinders über eine Dauer von jeweils etwa 1 s ausgesetzt. Die Kurve 60 zeigt den Verlauf der mittels Thermographie ermittelten Temperatur des Katalysatorträgers 26, gemessen im mittleren Bereich der Katalysatorstirnfläche 28. Die Kurve 62 zeigt den mit dem Temperatursensor 48 gemessenen Temperaturverlauf in der Mitte der Stirnfläche 28. Kurve 64 zeigt die Abgastemperatur stromauf des Katalysators 12 und Kurve 66 zeigt den Verlauf der HC-Konzentration stromauf des Katalysators 12. Infolge der Zündaussetzer und der im betroffenen Zylinder der Brennkraftmaschine 14 nicht stattfindenden Verbrennung kommt es jeweils zu einem Anstieg der HC-Konzentration im Abgas um zirka 9000 ppm (Kurve 66). Die unverbrannten Kohlenwasserstoffe werden im Katalysator 12 katalytisch umgesetzt, wobei durch diese exotherme Nachverbrennung temporäre Temperaturspitzen thermographish beobachtet werden (Kurve 60). Dabei steigt die Katalysatortemperatur ausgehend von einem Grundniveau bei etwa 870 °C jeweils kurzfristig auf über 1000 °C an. Die Halbwertsbreiten dieser Temperaturpeaks liegen im Bereich von etwa 400 bis 500 ms. Auf der anderen Seite kommt es infolge der aussetzenden Verbrennung zu periodischen Abkühlungen des Abgases (Kurve 64). Auffällig ist, dass durch die herkömmliche Temperaturmessung auf der Katalysatorstirnfläche 28 mit dem Thermoelement 48 keinerlei Temperaturanstieg detektiert wird (Kurve 62). Vielmehr wird nach jedem Zündaussetzer sogar eine leichte Abkühlung ermittelt, die durch das kühlere Abgas (Kurve 64) hervorgerufen wird. Aus dieser Messreihe wird ersichtlich, dass durch herkömmliche Temperatursensoren die Ermittlung tatsächlicher Festkörpertemperaturen nur begrenzt oder gar nicht möglich ist, da das Messergebnis immer von der Temperatur des einströmenden Abgases beeinflusst wird. Ferner sind herkömmliche Thermoelemente aufgrund ihrer thermischen Trägheit nicht in der Lage, kurzfristige Temperaturereignisse, die nicht zu einer Erwärmung des Thermoelementes führen, zu detektieren.

Figur 4 zeigt eine ähnliche Messreihe wie Figur 3, wobei hier jedoch in Abständen von etwa 2 s jeweils nur ein einzelner Zündaussetzer eines Zylinders hervorgerufen wurde, was einem mit 50 Hz auftretenden Ereignis entspricht. Die einzelnen Zündaussetzer führen zu einem Anstieg der HC-Konzentration ausgehend von 700 ppm auf etwa 2000 ppm. Dabei wird thermographisch jeweils ein Temperaturanstieg der Stirnfläche 28 von 870 auf über 890 °C registriert (Kurve 60). Auch diese Temperaturspitzen, die eine Halbwertsbreite von unter 100 ms aufweisen, werden durch das auf der Katalysatorstirnfläche angeordnete Thermoelement nicht registriert (Kurve 62).

Die Figuren 3 und 4 machen deutlich, dass sowohl Mehrfach- als auch Einfachzündaussetzer zu einem kritischen kurzfristigen Anstieg der Temperatur des Katalysatorträgers 26 führen. Treten solche Zündaussetzer im Volllastbetrieb bei ohnehin sehr hohen Katalysatortemperaturen auf, besteht die Gefahr einer Erhitzung des Katalysators über die zulässige Maximaltemperatur hinaus. Mindestens ebenso schädlich ist jedoch auch die hier stattfindende thermische Wechselbelastung mit sehr hohen Aufheiz- und Abkühlraten, wobei die (negative) Abkühlrate als weitaus kritischer anzusehen ist als die (positive) Aufheizrate. Während bislang kurzfristige dynamische Zündaussetzer infolge der mangelhaften Detektion der wirklichen Katalysatortemperatur hinsichtlich ihres Schädigungspotentials unterschätzt wurden, sieht die vorliegende Erfindung vor, die Motorsteuerung derart anzupassen, dass Zündaussetzer im Volllastbetrieb wirkungsvoller unterdrückt werden.

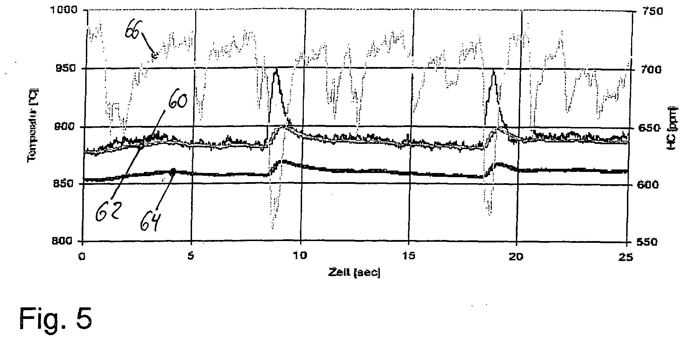

Figur 5 zeigt Messergebnisse, die auf dem Prüfstand erhalten wurden, wenn bei fettem Abgas bei Lambda = 0,85, in periodischen Abständen kurzzeitig Frischluft in den Krümmer eingeblasen wurde. In dem abgebildeten Zeitausschnitt erfolgte die Lufteinblasung jeweils zwischen etwa 8 und 9 s sowie zwischen 18 und 19 s. Obwohl durch die Lufteinblasung das Abgas vor dem Katalysator verdünnt wird und die HC-Konzentration somit abnimmt, kommt es zu einem kurzfristigen Temperaturanstieg des Katalysators um etwa 70 K. Der Temperaturanstieg ist durch die exotherme Nachverbrennung der im fetten Abgas im Überschuss enthaltenen Kohlenwasserwasserstoffe mit dem eingeblasenen Sauerstoff zurückzuführen. Die Halbwertsbreite der thermographisch ermittelten Temperaturspitzen von etwa 500 bis 700 ms reicht zwar aus, um auch vom Thermoelement registriert werden. Die absolute Temperaturänderung wird jedoch um zirka 75 % zu niedrig und mit einer gewissen Verzögerung angezeigt.

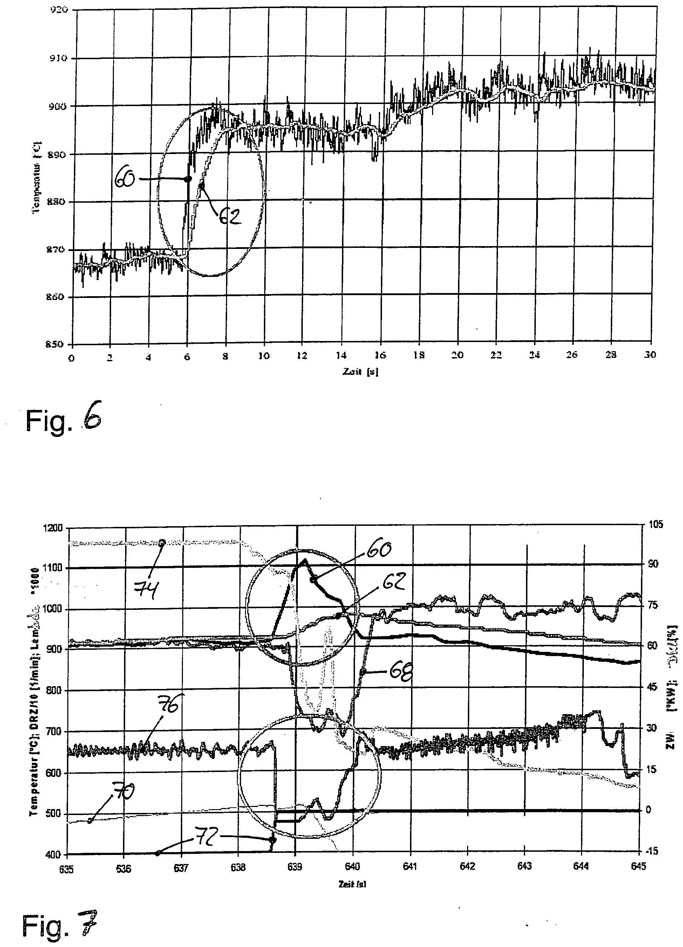

Figur 6 zeigt Messergebnisse, die bei einer einmaligen Zündwinkelrücknahme (Spätverstellung) um 6 °KW bei ansonsten konstanten Betriebsparametern im Teillastmotorbetrieb erhalten wurden. Infolge des durch die Verstellung verschlechterten Motorwirkungsgrades und der in die Abgasanlage verschleppten Verbrennung kommt es zu einem schnellen Temperaturanstieg am Katalysator um etwa 30 K, der mit beiden Messmethoden hinsichtlich des absoluten Wertes richtig erfasst wird. Auffällig ist aber auch hier das verzögerte Ansprechen des Thermoelements. Während thermographisch noch vor Ablauf von 250 ms nach der Zündwinkelrücknahme 50 % des Temperatursprungs registriert werden, zeigt das Thermoelement erst nach etwa 800 ms 50 % des Anstiegs an. Daraus ergibt sich im Falle des Thermoelements eine fehlerhafte Wiedergabe des für die Auslegung der Motorsteuerung entscheidenden Temperaturtransienten.

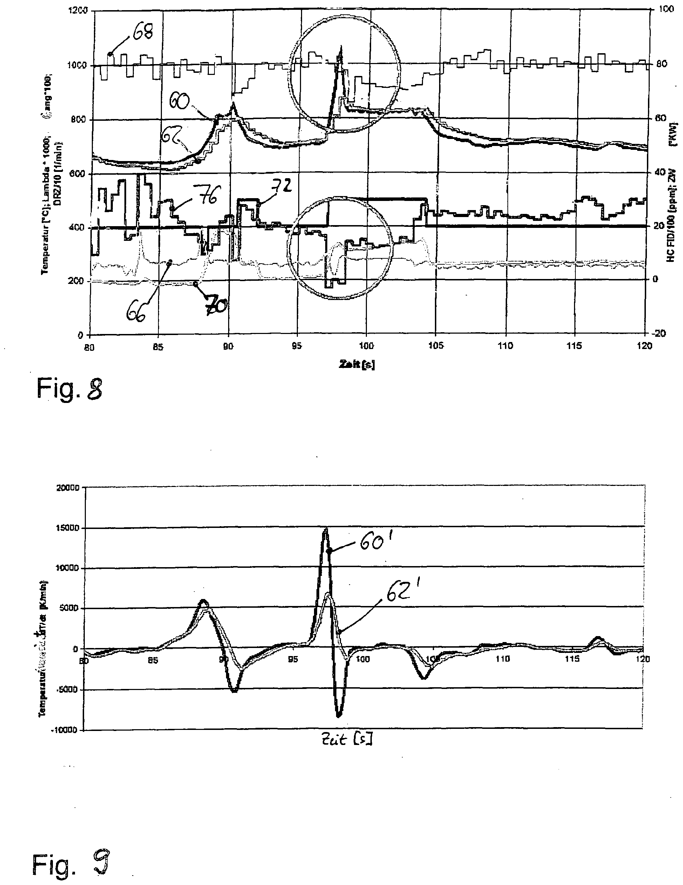

Die Figuren 7 bis 9 zeigen Motorprüfstandsergebnisse dynamischer Fahrzyklen. Die zur Steuerung der Fahrzyklen notwendigen Betriebsparameter wurden im instationären Betrieb eines Fahrzeugs mit Automatikschaltung im Innenbahnzyklus ermittelt. Insbesondere zeigen die Abbildungen den Einfluss von Zündwinkelrücknahmen zum Zwecke des Momentenabbaus im automatischen Schaltbetrieb. Dargestellt ist die thermographisch mit einer Messfrequenz von 5 Hz erfasste Katalysatortemperatur (Kurve 60), die mit einem Thermosensor ebenfalls an der Stirnfläche gemessene Katalysatortemperatur (Kurve 62) und die stromauf des Katalysators vorliegende HC-Konzentration (Kurve 66, nur in Figur 8). Gezeigt sind ferner die Verläufe des Luft-Kraftstoff-Gemischs Lambda (Kurve 68), der Drehzahl DRZ (Kurve 70), des getriebeseitigen Gangs (Kurve 72), der Drosselklappenstellung DKL (Kurve 68, nur in Figur 7) sowie des Zündwinkels ZW (Kurve 76). Die Einheiten des Zündwinkels sind in Kurbelwellenwinkel vor dem oberen Zündtotpunkt ZOT angegeben. Figur 9 zeigt darüber hinaus die zeitlichen Katalysatortemperaturänderungen (Temperaturtransienten), bestimmt durch Thermographie (Kurve 60') sowie mit Thermoelement (Kurve 62'). Die Kurven 60' und 62' wurden durch Bildung der ersten Ableitung der Kurven 60 beziehungsweise 62 der Abbildung 8 erhalten und zur besseren Vergleichbarkeit und zur Glättung auf 1 Hz gemittelt.

Wie bei Automatikgetrieben üblich, wird der Schaltvorgang in den nächsthöheren Gang von einer Zündwinkelrücknahme begleitet, um durch die Verschlechterung des Motorwirkungsgrades einen möglichst schnellen und präzisen Drehmomentenabbau beim Schaltübergang zu erzielen. Im vorliegenden Beispiel erfolgte eine Spätverstellung des Zündwinkels auf maximal 3,75° kW nach ZOT. Eine solche Situation liegt in Figur 7 bei etwa 638,5 s und in den Figuren 8 und 9 bei etwa 97 s vor. In beiden Fällen kommt es aufgrund der zeitlich verschleppten Verbrennung und der erhöhten HC-Konzentration im Abgas zu einer thermographisch detektierten, dramatischen Temperaturzunahme auf etwa 1100 °C. Wie bereits bei den vorangehenden Messungen wird auch dieser Temperaturanstieg hinsichtlich Zeit und absolutem Wert nur thermographisch richtig wiedergegeben (Kurve 60). Durch das im Katalysator angeordnete Thermoelement hingegen werden nur etwa 50 % des Temperaturanstiegs erfasst und die Maximaltemperatur mit einer erheblichen zeitlichen Verzögerung von etwa 1 s angezeigt. Wie aus Figur 9 hervorgeht, kommt es hierbei zu Aufheizraten von +15000 K/min (+250 K/s) und Abkühlraten von über -8000 K/min (-133 K/s). Aufgrund des langsameren Ansprechens des Thermoelements und der geringen detektierten Temperaturänderung zeigt die Kurve 62' nur geringe Werte für die Aufheiz- und Abkühlraten.

Die extremen, in den Figuren 7 bis 9 verdeutlichten thermischen Belastungen des Katalysators im automatischen Schaltbetrieb infolge der wiederholten Zündwinkelrücknahmen machen das Erfordernis deutlich, neue Konzepte zum Momentenabbau während der Schaltvorgänge bei Automatikgetrieben zu entwickeln. Insbesondere können erhöhte thermische Belastungen des Katalysators vermieden werden, wenn der Drehmomentenabbau nicht allein durch Zündwinkelrücknahme erfolgt. Denkbar ist hier beispielsweise, durch eine Kombination aus Zündwinkelrücknahme und Variation der Drosselklappenstellung den Momentenabbau durchzuführen sowie durch Anpassung der erlaubten Fahrerwunschmomente.

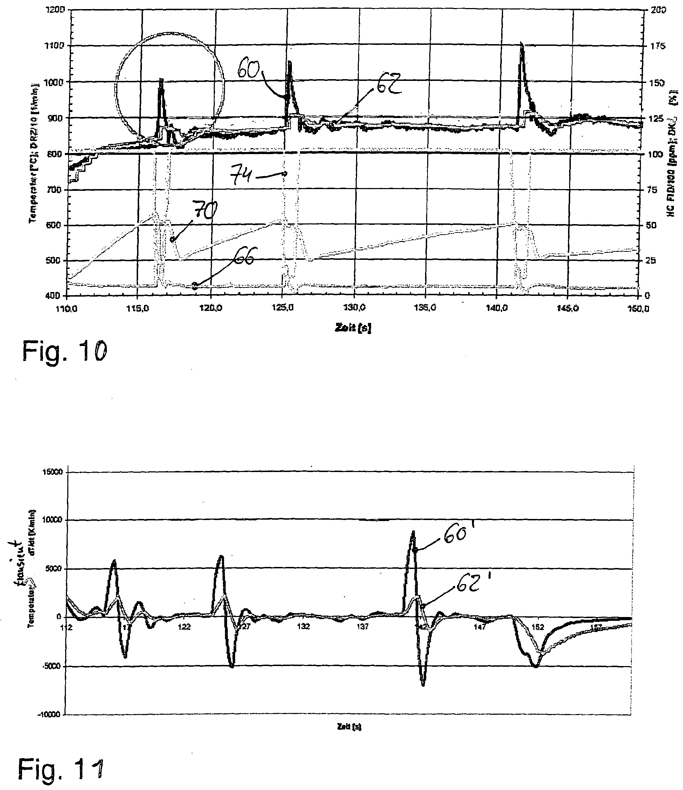

Die Figuren 10 bis 12 zeigen Ergebnisse, die auf dem Prüfstand in dynamischen Fahrzyklen, ermittelt auf einer Schnellbahn mit einem Fahrzeug mit Handschaltung, erhalten wurden. In Figur 10 sind dargestellt die thermographisch mit einer Messfrequenz von 50 Hz ermittelte Katalysatortemperatur (Kurve 60), die mittels Thermoelement ermittelte Katalysatortemperatur (Kurve 62), die Abgas HC-Konzentration (Kurve 66), die Drehzahl (Kurve 70) sowie die Drosselklappenöffnung (Kurve 74). In dem in Figur 10 dargestellten Zeitabschnitt erfolgen drei Schaltvorgänge, nämlich bei Sekunde 115, 125 sowie 141. Wie bei Handschaltern üblich, erfolgt ein Drehmomentenabbau beim Schaltvorgang durch den Fahrer selbst, indem dieser kurzzeitig das Gaspedal zurücknimmt. Infolgedessen schließt sich die Drosselklappe (Kurve 74). Ähnlich den Automatikgetrieben wird jedoch auch hier der Drehmomentenabbau durch schnelle Zündwinkelrücknahme unterstützt. Hierdurch kommt es zu HC-Spitzen (Kurve 66), sowie zu dramatischen temporären Temperaturanstiegen im Katalysator (Kurve 60), die bis zu 1100 °C erreichen. Wie thermographisch ebenfalls gezeigt werden konnte, werden an den heißesten Stellen der Stirnfläche, den so genannten Hot-Spots, Temperaturen von sogar über 1200 °C erreicht.

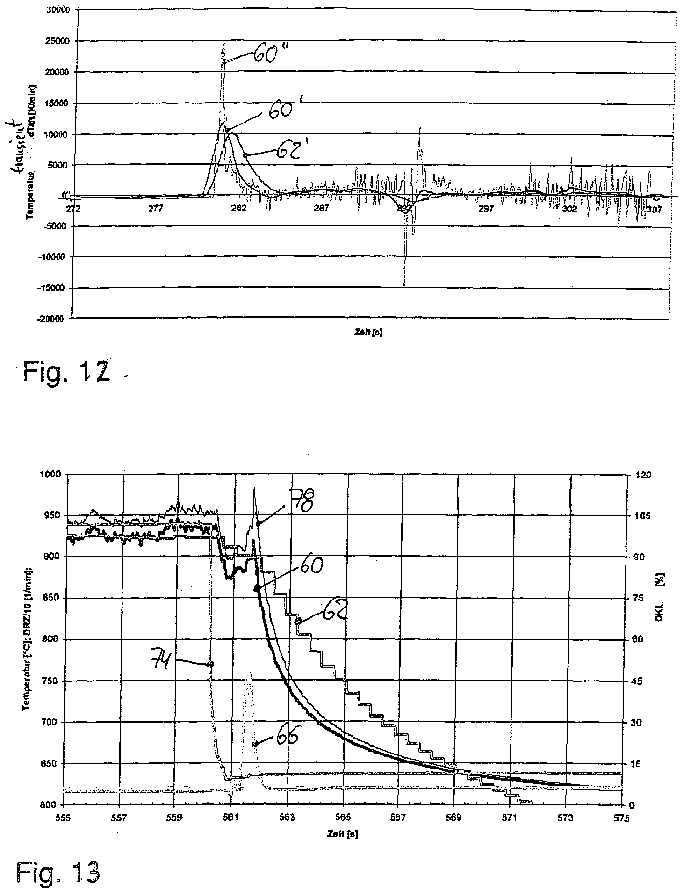

Figur 11, die die aus Figur 10 erhaltenen Temperaturtransienten - gebildet aus den ersten Ableitungen der Kurven 60 und 62 - darstellt, zeigt Aufheizraten im Zuge der drei Schaltvorgänge von über +8000 K/min sowie Abkühlraten von etwa -7000 K/min. Beide Kurven wurden zur besseren Vergleichbarkeit auf 1 Hz gemittelt. Auch hier zeigt sich anhand des Verlaufs der Kurve 62' wiederum das verzögerte und zu geringe Ansprechen des Thermoelements. Figur 12 zeigt thermographisch und mittels Thermoelement ermittelte Temperaturtransienten der gleichen Messreihe. Zusätzlich ist hier neben den auf 1 Hz gemittelten Kurven 60' und 62' der auf 10 Hz gemittelte Verlauf der thermographisch ermittelten Katalysatortemperatur (Kurve 60") dargestellt. Es wird deutlich, dass die Mittlung auf 10 Hz gegenüber der 1 Hz-Mittlung zwar mit einem schlechteren Signal-RauschVerhältnis einhergeht, die Mittlung auf 1 Hz jedoch auch mit einem Informationsverlust behaftet ist. Insbesondere werden die wahren Intensitäten stark geglättet.

Figur 13 zeigt eine Messung im dynamischen Fahrzyklus bei einem Übergang von Volllastin den Schubbetrieb. Beim Übergang in die Schubphase schließt die zuvor voll geöffnete Drosselklappe auf 10 % (Kurve 74). Gleichzeitig wird die Kraftstoffzufuhr zum Motor unterbrochen (Schubabschaltung) beziehungsweise mit einer vorgegebenen Funktion (Dashpot-Funktion) über einige Arbeitsspiele heruntergefahren. Infolgedessen kommt es zu einer schnellen Abkühlung am Katalysator. Diese wird sowohl thermographisch (Kurven 60) als auch mittels Thermoelement (Kurve 62) ermittelt. Durch die thermische Trägheit des Thermoelements zeigt dieses jedoch einen verzögerten und weniger steilen Abfall. Zusätzlich zu dem im Bereich der Mitte der Katalysatorstirnfläche 28 erhaltenen Temperaturverlauf zeigt Kurve 78 noch die am heißesten Punkt der Stirnfläche 28 thermographisch erfassten Temperaturwerte, die stets über denen der Mitte liegen. Hier zeigt sich der Vorteil der ortsaufgelösten Temperaturerfassung, die eine Berücksichtigung der gesamten Katalysatorfläche erlaubt.

Die Dashpot-Funktion, mit der üblicherweise im Schubbetrieb die Kraftstoffzufuhr zurückgefahren wird, hat die Aufgabe, einen durch unverbrannten Kraftstoff gebildeten Wandfilm der Zylinder so auszutragen, dass dieser noch verbrannt werden kann. Dabei wird in den ersten Arbeitsspielen nach Beginn der Schubphase der Wandfilmabriss moduliert und so viel Kraftstoff zugeführt, dass ein gerade noch zündfähiges Gemisch entsteht. Die Dashpot-Funktion soll verhindern, dass der unverbrannt ausgestoßene Kraftstoffwandfilm am Katalysator verbrennt und somit zu einer erhöhten Temperaturbelastung führt. Wie an der Kurve 66 der Figur 12 zu erkennen ist, gelingt dies jedoch nur unvollständig. Es kommt zu einem gewissen Ausstoß an unverbrannten Kohlenwasserstoffen HC und deren Nachverbrennung am Katalysator, wodurch dort exotherme Temperaturspitzen hervorgerufen werden. Kurve 78, die die thermographisch ermittelte Katalysatortemperatur an der heißesten Stelle der Stirnfläche darstellt, zeigt, dass hierbei Katalysatortemperaturen von bis zu 980 °C auftreten. Erfindungsgemäß ergibt sich hier die Möglichkeit, die Dashpot-Funktion so zu optimieren, dass diese Temperaturspitzen am Katalysator vermieden werden.

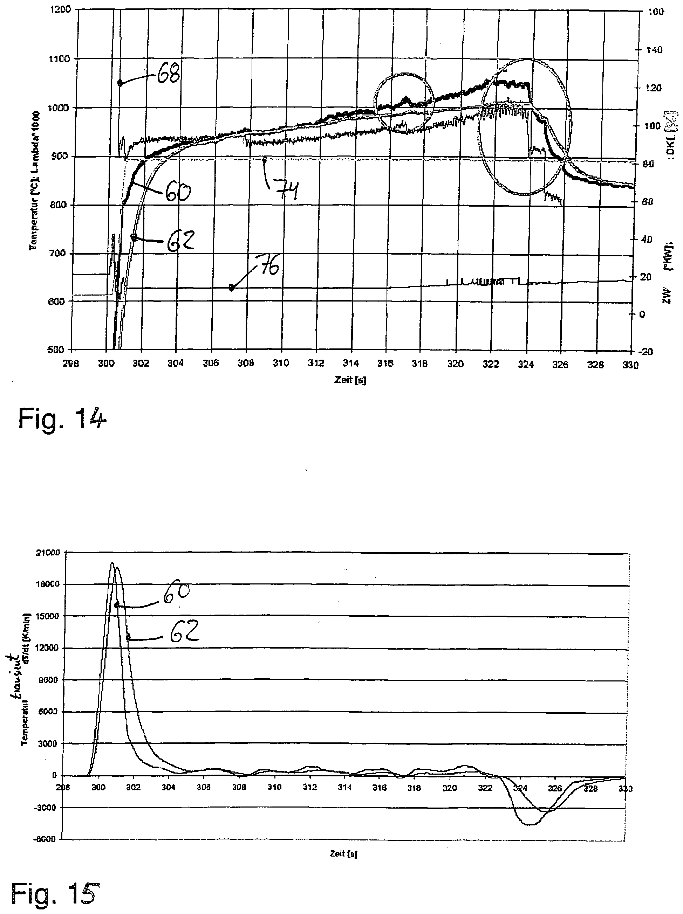

Die Figuren 14 und 15 zeigen den Einfluss einer Lambdaabsenkung (Lambdaanfettung) im dynamischen Fahrzyklus bei einem Übergang von Schub- in Volllastbetrieb. Beim Schub-Volllast-Übergang wird die Kraftstoffunterbrechung aufgehoben und ein vorgegebenes Luft-Kraftstoff-Gemisch Lambda eingestellt. Entsprechend kommt Kurve 68 in Figur 14 aus dem positiven Unendlichen und stellt sich bei dem vorgegebenen Wert ein. Aufgrund der einsetzenden Verbrennung kommt es zu einer sehr schnellen Aufheizung des Katalysators, wie am Verlauf der thermographisch ermittelten Temperaturkurve 60 ersichtlich ist. Trägheitsbedingt läuft der mit dem Thermoelement ermittelte Temperaturverlauf der wahren Temperatur hinterher (Kurve 62). Um in solchen Situationen den Katalysator vor einer zu extremen thermischen Belastung zu schützen, ist es üblich, das Verbrennungslambda stärker als erforderlich abzusenken. Da der eingespritzte Kraftstoff nicht vollständig verbrennt, entsteht eine Abkühlung durch Verdunstung des Kraftstoffs. Im dargestellten Beispiel beginnt diese so genannte Bauteilschutzanfettung etwa in Sekunde 324, wo eine stufenweise Lambdaabsenkung auf extrem fette Werte einsetzt. Die in dem dargestellten Beispiel verwendete Motorsteuerung erfolgte herkömmlich anhand der mit Thermosensoren erfassten Katalysatortemperatur. Es wird jedoch deutlich, dass diese Temperatur um etwa 50 °C unterschätzt wird. Erfindungsgemäß ergibt sich hier die Möglichkeit, die Motorsteuerung für Bauteilschutzanfettung hinsichtlich eines besseren Katalysatorschutzes zu optimieren. Insbesondere zeigt sich das Erfordernis, die Schutzanfettung frühzeitiger zu beginnen.

Figur 15 zeigt die aus den Kurven 60 und 62 der Figur 14 ermittelten Temperaturtransienten. Beide Kurven wurden auf 1 Hz gemittelt.

Zusammenfassend lässt sich feststellen, dass die erfindungsgemäße Temperaturerfassung von Katalysatoren mit hoher Zeitauflösung und hoher Ortsauflösung eine genauere Vorstellung des exakten Temperaturverhaltens in bestimmten Betriebssituationen erlaubt. Dies eröffnet die Möglichkeit, die Motorsteuerung, das heißt einerseits die dort gespeicherten Kennfelder und Grenzwerte sowie die zur Steuerung herangezogenen Algorithmen zu optimieren. Extreme Temperaturbelastungen des Katalysators, die bislang nicht zu detektieren waren, können nun wirkungsvoll vermieden werden. Auf diese Weise lassen sich Katalysatorschäden vermeiden und eine hohe Abgassicherheit gewährleisten.

### BEZUGSZEICHENLISTE

- 10: Vorrichtung
- 12: Katalysator
- 14: Verbrennungskraftmaschine
- 16: Abgasstrang
- 18: Abgas
- 20: Gehäuse
- 22: Einlassstutzen
- 24: Auslassstutzen
- 26: Katalysatorträger
- 28: Eintrittsstirnfläche
- 30: Austrittsstirnfläche
- 32: Motorsteuergerät
- 34: Getriebesteuergerät
- 36: Bildaufzeichnungseinrichtung
- 38: Nah-Infrarot-Thermographiekamera
- 40: Objektiv
- 42: optisches Fenster
- 44: Auswerteeinrichtung
- 46: Kalibrierung
- 48: Thermosensoren
- 50: Speichermittel
- 52: Messfläche
- 54: Signalleitungen
- 60: Temperaturverlauf, thermographisch gemessen auf Katalysatorstirnfläche Mitte
- 60': thermographisch gemessener Temperaturtransient
- 62: Temperaturverlauf, mittels Thermoelement gemessen auf Katalysatorstirnfläche Mitte
- 62': mittels Thermoelement gemessener Temperatutransient
- 64: Temperaturverlauf im Abgas, mittels Thermoelement gemessen vor Katalysator
- 66: HC-Emission vor Katalysator
- 68: Lambda
- 70: Drehzahl DRZ
- 72: Gang
- 74: Drosselklappe DKL
- 76: Zündwinkel ZW
- 78: Temperaturverlauf, thermographisch gemessen auf Katalysatorstirnfläche Hot-Spot

## Patentansprüche

1. Verfahren zur Anpassung einer Motorsteuerung (32) bezüglich einer thermischen Belastung eines Katalysators (12), wobei eine Brennkraftmaschine (14) in einem stationären und/oder instationären Betrieb unter vorgegebenen Testzyklen betrieben und eine Katalysatortemperatur betriebspunktabhängig ermittelt wird und bei Vorliegen einer erhöhten thermischen Belastung des Katalysators (12) mindestens eine applikative Maßnahme in der Motorsteuerung (32) für eine spätere Nutzung in einem realen Fahrzeugbetrieb derart erfolgt, dass unter gleichartigem Betrieb der Brennkraftmaschine (14) im realen Fahrzeugbetrieb diese erhöhte thermische Belastung vermieden wird, **dadurch gekennzeichnet, dass** im Testbetrieb die Katalysatortemperatur über eine im Wesentlichen quer zur Abgasströmungsrichtung angeordnete Messfläche (52) des Katalysators (12) von mindestens 4 cm² ermittelt wird, wobei die thermische Belastung innerhalb der Messfläche (52) an mindestens zwei Messpunkten ortsaufgelöst bestimmt wird.

2. Verfahren nach Anspruch 1, **dadurch gekennzeichnet, dass** die Katalysatortemperatur über eine Messfläche (52) von mindestens 6,5 cm², vorzugsweise mindestens 9 cm² ermittelt wird.

3. Verfahren nach einem der Ansprüche 1 oder 2, **dadurch gekennzeichnet, dass** die Katalysatortemperatur an mindestens fünf, insbesondere an mindestens 20 Messpunkten bestimmt wird.

4. Verfahren nach einem der vorhergehenden Ansprüche, **dadurch gekennzeichnet, dass** die Katalysatortemperatur bei einem Temperatursprung (ΔT) in einem Bereich von 20 K bis 150 K bei einer Ausgangstemperatur in einem Bereich von 500 °C bis 950 °C mit mindestens einer der folgenden Zeitauflösungen ermittelt wird:
- nach 10 ms wird mindestens 10 % des Temperatursprungs erfasst,
- nach 100 ms wird mindestens 20 % des Temperatursprungs erfasst,
- nach 500 ms wird mindestens 35 % des Temperatursprungs erfasst,
- nach 1000 ms wird mindestens 50 % des Temperatursprungs erfasst.

5. Verfahren nach Anspruch 4, **dadurch gekennzeichnet, dass** die Katalysatortemperatur mit Aufheizraten und/oder Abkühlraten von mindestens |100 K/s|, insbesondere von mindestens |200 K/s|, vorzugsweise von mindestens |1000 K/s| mit mindestens einer der Zeitauflösungen erfasst wird.

6. Verfahren nach einem der Ansprüche 4 oder 5, **dadurch gekennzeichnet, dass** temporäre Temperaturspitzen der Katalysatortemperatur mit einer Halbwertsbreite von höchstens 1000 ms, insbesondere höchstens 500 ms, vorzugsweise höchstens 250 ms aufgelöst werden, wobei mindestens 50 % des Temperatursprungs erfasst werden.

7. Verfahren nach einem der Ansprüche 4 bis 6, **dadurch gekennzeichnet, dass** die Katalysatortemperatur mit einer Frequenz von mindestens 10 Hz, insbesondere von mindestens 50 Hz erfasst wird.

8. Verfahren nach einem der vorhergehenden Ansprüche, **dadurch gekennzeichnet, dass** die Katalysatortemperatur mittels Thermographie ermittelt wird, insbesondere mit Infrarot-Thermographie im nahen oder mittleren Infrarotbereich.

9. Verfahren nach einem der vorhergehenden Ansprüche, **dadurch gekennzeichnet, dass** als thermische Belastung die tatsächliche Festkörpertemperatur eines Trägers (26) des Katalysators (12) getrennt von der Temperatur eines Washcoats ermittelt wird.

10. Verfahren nach einem der vorhergehenden Ansprüche, **dadurch gekennzeichnet, dass** die thermische Belastung an einer Eintrittsstirnfläche (28) und/oder einer Austrittsstirnfläche (30) und/oder weiteren Flächen (28, 30) des Katalysators (12) bestimmt wird.

11. Verfahren nach einem der vorhergehenden Ansprüche, **dadurch gekennzeichnet, dass** in mindestens einer der folgenden Betriebssituationen die Katalysatortemperatur des Katalysators (12) im stationären und/oder instationären Betrieb erfasst wird:
- Situationen mit hohem Risiko für Einfach- und/oder Mehrfachzündaussetzer,
- Zündwinkelverstellungen,
- Schaltvorgänge bei Automatik- und bei Handschaltungen,
- Übergänge von Volllast- in Schubbetrieb und/oder von Schub- in Volllastbetrieb,
- Lambdaabsenkungen ausgehend von fettem Lambda als Maßnahme zum Bauteilschutz,
- Lufteinblasungen in den Krümmer bei fettem Lambda,
- Lambdaoszillationen.

12. Verfahren nach einem der vorhergehenden Ansprüche, **dadurch gekennzeichnet, dass** für jede im stationären und/oder instationären Betrieb durchlaufene Betriebssituation die für die Temperaturänderung des Katalysators (12) maßgeblichen Betriebsparameter der Brennkraftmaschine (14) zusammen mit den ermittelten Katalysatortemperaturen ermittelt werden.

13. Verfahren nach einem der vorhergehenden Ansprüche, **dadurch gekennzeichnet, dass** die mindestens eine applikative Maßnahme, insbesondere die Kennfelder und/oder Steueralgorithmen, derart ausgelegt wird, dass eine katalysatorspezifische kritische Absoluttemperatur des Katalysators (12) und/oder eine kritische Aufheizrate und/oder eine kritische Abkühlrate vermieden wird.

14. Verfahren zur Steuerung einer Brennkraftmaschine (14), der mindestens ein Katalysator (12) nachgeschaltet ist, wobei Betriebsparameter zur Steuerung der Brennkraftmaschine (14) in Abhängigkeit einer aktuellen Betriebssituation anhand von applikativen Mitteln einer Motorsteuerung (32), insbesondere anhand von Kennfeldern und/oder Algorithmen, vorgegeben werden derart, dass eine erhöhte thermische Belastung des Katalysators (12) vermieden wird und wobei die applikativen Mittel der Motorsteuerung (32) gemäß einem Verfahren nach einem der Ansprüche 1 bis 13 ermittelt werden.

15. Motorsteuerung (32) einer Brennkraftmaschine (14) mit mindestens einem nachgeschalteten Katalysator (12), wobei die Motorsteuerung (32) applikative Mittel, insbesondere Kennfelder und/oder Algorithmen, umfasst, mit denen die Brennkraftmaschine (14) derart gesteuert wird, dass in einem Betrieb der Brennkraftmaschine (14) eine erhöhte thermische Belastung des mindestens einen Katalysators (12) vermieden wird, und wobei die applikativen Mittel gemäß einem Verfahren nach einem der Ansprüche 1 bis 13 ermittelt werden.

## Claims

1. Method for adapting an engine controller (32) with regard to a thermal stress of a catalytic converter (12), wherein an internal combustion engine (14) is operated under predefined test cycles in a steady state and/or non-steady state operating mode and a catalytic converter temperature is determined in an operating-point-dependent manner and, in the presence of an increased thermal stress of the catalytic converter (12), at least one applicative measure is implemented in the engine controller (32) for later utilization in a real vehicle operating mode such that said increased thermal stress is avoided under similar operation of the internal combustion engine (14) in the real vehicle operating mode, **characterized in that**, in the test operating mode, the catalytic converter temperature is determined over a measurement surface (52) of the catalytic converter (12) of at least 4 cm², said measurement surface being arranged substantially transversely with respect to the exhaust-gas flow direction, wherein the thermal stress within the measurement surface (52) is determined in a spatially resolved manner at at least two measurement points.

2. Method according to Claim 1, **characterized in that** the catalytic converter temperature is determined over a measurement surface (52) of at least 6.5 cm², preferably at least 9 cm².

3. Method according to either of Claims 1 and 2, **characterized in that** the catalytic converter temperature is determined at at least five, in particular at at least 20 measurement points.

4. Method according to one of the preceding claims, **characterized in that** the catalytic converter temperature is determined, for a temperature step (ΔT) in a range from 20 K to 150 K with a starting temperature in a range from 500 °C to 950 °C, with at least one of the following time resolutions:
- after 10 ms, at least 10% of the temperature step is detected,
- after 100 ms, at least 20% of the temperature step is detected,
- after 500 ms, at least 35% of the temperature step is detected,
- after 1000 ms, at least 50% of the temperature step is detected.

5. Method according to Claim 4, **characterized in that** the catalytic converter temperature is detected with heating rates and/or cooling rates of at least |100 K/s|, in particular of at least |200 K/s|, preferably of at least |1000 K/s|, with at least one of the time resolutions.

6. Method according to either of Claims 4 and 5, **characterized in that** temporary temperature peaks of the catalytic converter temperature are resolved with a half-value width of at most 1000 ms, in particular at most 500 ms, preferably at most 250 ms, wherein at least 50% of the temperature step is detected.

7. Method according to one of Claims 4 to 6, **characterized in that** the catalytic converter temperature is detected with a frequency of at least 10 Hz, in particular of at least 50 Hz.

8. Method according to one of the preceding claims, **characterized in that** the catalytic converter temperature is determined by means of thermography, in particular by means of infrared thermography in the near-infrared or mid-infrared range.

9. Method according to one of the preceding claims, **characterized in that**, as thermal stress, the actual solid body temperature of a substrate (26) of the catalytic converter (12) is determined separately from the temperature of a washcoat.

10. Method according to one of the preceding claims, **characterized in that** the thermal stress is determined at an inlet end surface (28) and/or at an outlet end surface (30) and/or at further surfaces (28, 30) of the catalytic converter (12).

11. Method according to one of the preceding claims, **characterized in that**, in at least one of the following operating situations, the catalytic converter temperature of the catalytic converter (12) is detected in the steady state and/or non-steady state operating mode:
- situations with a high risk of single and/or multiple misfires,
- ignition angle adjustments,
- shift processes during automatic and manual shifts,
- transitions from full load to overrun operation and/or from overrun to full load operation,
- lambda decreases proceeding from rich lambda as a measure for component protection,
- air injections into the manifold in the case of rich lambda,
- lambda oscillations.

12. Method according to one of the preceding claims, **characterized in that**, for every operating situation run through in the steady state and/or non-steady state operating mode, those operating parameters of the internal combustion engine (14) which are significant for the temperature change of the catalytic converter (12) are determined together with the determined catalytic converter temperatures.

13. Method according to one of the preceding claims, **characterized in that** the at least one applicative measure, in particular the characteristic maps and/or control algorithms, are configured such that a catalytic-converter-specific critical absolute temperature of the catalytic converter (12) and/or a critical heating-up rate and/or a critical cooling rate is avoided.

14. Method for controlling an internal combustion engine (14), downstream of which is positioned at least one catalytic converter (12), wherein operating parameters for the control of the internal combustion engine (14) are predefined as a function of a present operating situation on the basis of applicative means of an engine controller (32), in particular on the basis of characteristic maps and/or algorithms, in such a way that an increased thermal stress of the catalytic converter (12) is avoided, and wherein the applicative means of the engine controller (32) are determined in accordance with a method according to one of Claims 1 to 13.

15. Engine controller (32) of an internal combustion engine (14) having at least one catalytic converter (12) positioned downstream, wherein the engine controller (32) comprises applicative means, in particular characteristic maps and/or algorithms, with which the internal combustion engine (14) is controlled such that, in an operating mode of the internal combustion engine (14), an increased thermal stress of the at least one catalytic converter (12) is avoided, and wherein the applicative means are determined in accordance with a method according to one of Claims 1 to 13.

## Revendications

1. Procédé d'adaptation d'une commande de moteur (32) en ce qui concerne une charge thermique d'un catalyseur (12), dans lequel on fait fonctionner un moteur à combustion interne (14) en une marche stationnaire et/ou non stationnaire dans des cycles de test prédéterminés et on détermine une température de catalyseur en fonction du point de fonctionnement et, en présence d'une charge thermique accrue du catalyseur (12), on produit au moins une mesure applicative dans la commande de moteur (32) pour une utilisation ultérieure dans un fonctionnement réel du véhicule, de telle manière que, lors d'un fonctionnement analogue du moteur à combustion interne (14) dans un fonctionnement réel du véhicule, cette charge thermique accrue soit évitée, **caractérisé en ce que**, dans la marche de test, on détermine la température du catalyseur sur une surface de mesure (52) du catalyseur (12) d'au moins 4 cm² disposée essentiellement transversalement à la direction d'écoulement des gaz d'échappement, dans lequel on détermine la charge thermique à l'intérieur de la surface de mesure (52) en au moins deux points de mesure avec résolution de position.

2. Procédé selon la revendication 1, **caractérisé en ce que** l'on détermine la température du catalyseur sur une surface de mesure (52) d'au moins 6,5 cm², de préférence d'au moins 9 cm².

3. Procédé selon l'une quelconque des revendications 1 ou 2, **caractérisé en ce que** l'on détermine la température du catalyseur en au moins cinq, de préférence en au moins 20 points de mesure.

4. Procédé selon l'une quelconque des revendications précédentes, **caractérisé en ce que** l'on détermine la température du catalyseur pour un saut de température (ΔT) dans une plage de 20K à 150K avec une température initiale dans une plage de 500°C à 950°C, avec au moins une des résolutions temporelles suivantes:
- après 10 ms, on détecte au moins 10 % du saut de température,
- après 100 ms, on détecte au moins 20 % du saut de température,
- après 500 ms, on détecte au moins 35 % du saut de température,
- après 1000 ms, on détecte au moins 50 % du saut de température.

5. Procédé selon la revendication 4, **caractérisé en ce que** l'on détecte la température du catalyseur avec des vitesses de chauffage et/ou des vitesses de refroidissement d'au moins |100K/s|, en particulier d'au moins |200K/s|, de préférence d'au moins |1000K/s| avec au moins une des résolutions temporelles.

6. Procédé selon l'une quelconque des revendications 4 ou 5, **caractérisé en ce que** l'on résout des pics de température temporaires de la température du catalyseur avec une demi-largeur d'au plus 1000 ms, en particulier d'au plus 500 ms, de préférence d'au plus 250 ms, dans lequel on détecte au moins 50 % du saut de température.

7. Procédé selon l'une quelconque des revendications 4 à 6, **caractérisé en ce que** l'on détecte la température du catalyseur avec une fréquence d'au moins 10 Hz, en particulier d'au moins 50 Hz.

8. Procédé selon l'une quelconque des revendications précédentes, **caractérisé en ce que** l'on détermine la température du catalyseur par thermographie, en particulier par thermographie infrarouge dans le domaine de l'infrarouge proche ou moyen.

9. Procédé selon l'une quelconque des revendications précédentes, **caractérisé en ce que** l'on détermine comme charge thermique la température de corps solide réelle d'un support (26) du catalyseur (12) séparément de la température d'un produit d'imprégnation.

10. Procédé selon l'une quelconque des revendications précédentes, **caractérisé en ce que** l'on détermine la charge thermique sur une surface d'entrée (28) et/ou sur une surface de sortie (30) et/ou sur d'autres surfaces (28 30) du catalyseur (12).

11. Procédé selon l'une quelconque des revendications précédentes, **caractérisé en ce que**, dans au moins une des situations de fonctionnement suivantes, on détermine la température de catalyseur du catalyseur (12) en marche stationnaire et/ou non stationnaire:
- situation à haut risque pour ratés d'allumage simples ou multiples,
- déplacements de l'angle de came;
- opérations de changement de vitesse avec boîtes automatiques et manuelles,
- passages de la marche à pleine charge à la marche en poussée et/ou de la marche en poussée à la marche à pleine charge,
- baisses de lambda à partir de lambda riche comme mesure pour la protection des pièces,
- insufflations d'air dans le collecteur en cas de lambda riche,
- oscillations de lambda.

12. Procédé selon l'une quelconque des revendications précédentes, **caractérisé en ce que**, pour chaque situation de fonctionnement parcourue en fonctionnement stationnaire et/ou non stationnaire, on détermine les paramètres de fonctionnement du moteur à combustion interne (14) déterminants pour la variation de la température du catalyseur (12) en même temps que les températures de catalyseur déterminées.

13. Procédé selon l'une quelconque des revendications précédentes, **caractérisé en ce que** ladite au moins une mesure applicative, en particulier les diagrammes caractéristiques et/ou les algorithmes de commande, est conçue de telle manière qu'une température absolue critique du catalyseur (12), spécifique au catalyseur, et/ou une vitesse de chauffage critique et/ou une vitesse de refroidissement critique soit évitée.

14. Procédé de commande d'un moteur à combustion interne (14), avec au moins un catalyseur (12) placé en aval, dans lequel on prédétermine des paramètres de fonctionnement pour la commande du moteur à combustion interne (14) en fonction d'une situation de fonctionnement actuelle au moyen de moyens applicatifs d'une commande de moteur (32), en particulier au moyen de diagrammes caractéristiques et/ou d'algorithmes, de telle manière qu'une charge thermique accrue du catalyseur (12) soit évitée, et dans lequel les moyens applicatifs de la commande de moteur (32) sont déterminés par un procédé selon l'une quelconque des revendications 1 à 13.

15. Commande de moteur (32) d'un moteur à combustion interne (14) avec au moins un catalyseur (12) placé en aval, dans laquelle la commande de moteur (32) comprend des moyens applicatifs, en particulier des diagrammes caractéristiques et/ou des algorithmes, avec lesquels le moteur à combustion interne (14) est commandé de telle manière que, dans un fonctionnement du moteur à combustion interne (14), une charge thermique accrue dudit au moins un catalyseur (12) soit évitée, et dans laquelle les moyens applicatifs sont déterminés par un procédé selon l'une quelconque des revendications 1 à 13.
